# EUROPEAN PATENT SPECIFICATION

(11) **EP 1 324 677 B1**
(45) Date of publication and mention of the grant of the patent: **05.10.2005**
(21) Application number: 01971518.4
(22) Date of filing: 08.10.2001
(51) Int. Cl.: A44B 18/00, B42D 1/06, B65D 33/25, B65D 65/08, F16B 5/07, F16C 11/04, F16D 1/112

(54) **A COUPLING DEVICE**
KOPPLUNGSVORRICHTUNG
DISPOSITIF DE COUPLAGE

(30) Priority: 10.10.2000 US 239471 P
(43) Date of publication of application: 09.07.2003
(73) Proprietor: WIZZOZ PTY LTD, Port Vila (VU)
(72) Inventor: Golding-Griessel, Lester Harold, Croydon Park, New South Wales 2133 (AU)
(74) Representative: Sherrard-Smith, Hugh
(86) International application number: PCT/AU2001/001258
(87) International publication number: WO 2002/030231

(56) References cited:
- EP-B1- 0 130 601
- DE-A1- 2 615 421
- NL-A- 7 502 231
- US-A- 3 829 938
- US-A- 5 119 531

## Description

The present invention relates to a coupling device which in use comprises two opposed coupling members and to uses for such a coupling device. In some embodiments, the coupling members may have substantial elongate extent and thereby form a closure device which may be capable of forming a seal between the coupling members. Such closure devices are sometimes known as plastic zippers or plastic fastener strips.

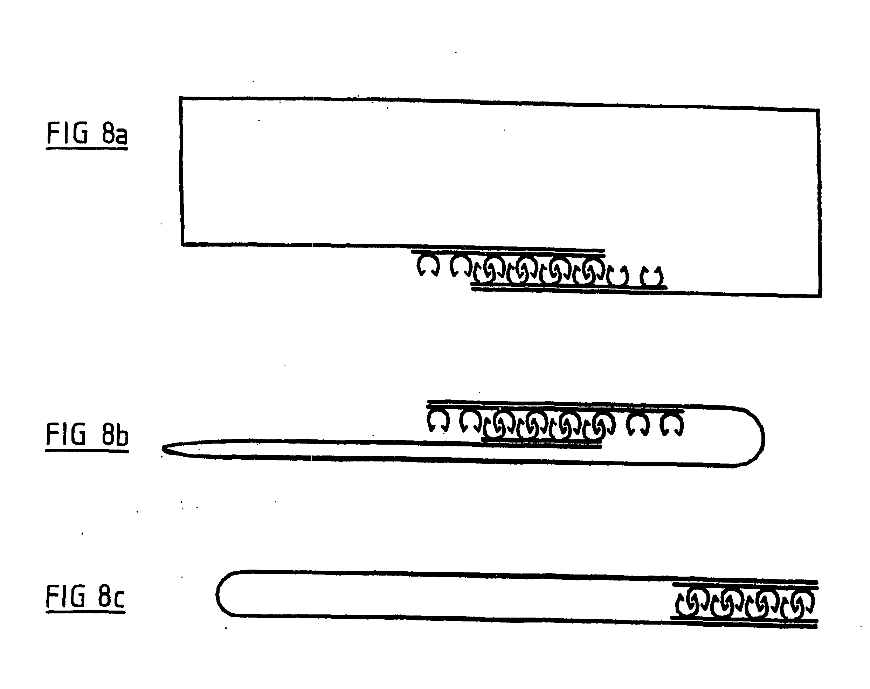

There have been many proposals for different types of plastic fastener strips, often with male to female opposed coupling members. One such proposal is described with reference to Figure 8 of US Patent Specification 4,673,383 in which a male coupling member defining an arrowhead is received in the open throat of a female, substantially C-shaped coupling member. The female coupling member has opposed catch members at its distal ends which cooperate with the arrowhead of the male coupling member to resist withdrawal of the male coupling member. Withdrawal is effected by resiliently deforming the coupling members. One of the disadvantages of this type of plastic fastener strip is that, for each pair of coupling members, there are two pairs of formations to engage and disengage, on respective sides of an axial plane bisecting the male and female coupling members. Furthermore, fastening of the coupling members cannot be achieved if the male coupling member is misaligned with the female coupling member. It will be noted that Figure 8 in US 4,673,383 illustrates a coil of the coupled coupling members stored in a container.

US 4,673,383 also discloses a non-male/female plastic fastener strip in which two reversed but otherwise identical coupling members each having two identical coupling elements are engaged with each other. The two coupling elements in each coupling member each have a distal catch member, with the two catch members projecting in the same direction. One of the coupling elements of each of the coupling members is received as a close fit between the two coupling elements of the other coupling member. This means that when it is desired to release the coupling members the one coupling element of each coupling member is constrained from deforming by two coupling elements of the other coupling member, giving increased resistance to separation of the coupling members. This resistance to separation is increased when a stabiliser flange of the type described with reference to Figure 7 in US 4,673,383 is employed. Such an arrangement requires very close tolerancing and quality control in manufacture.

A non-male/female variation of the male/female plastic fastener strip disclosed in US 4,673,383 is disclosed in US 4,792,240. In this proposal, both coupling members comprise two or more coupling elements, each of which comprises an arrowhead. In order to engage and disengage the coupling members, both sides of each coupling element which is received between two adjacent coupling elements must be deformed. While some embodiments of this proposal permit substantial misalignment by having multiple coupling elements in one or both coupling members, all of the proposals in US 4,673,383 and 4,792,240 have the requirement that for at least one of the coupling elements of each coupling member two of the opposed coupling elements must deform to permit its disengagement therefrom.

According to the present invention there is provided a coupling device comprising two coupling members each having a base portion and opposed coupling elements extending from the base portion, each coupling element having a distal portion and a body portion between the base portion and the distal portion and the opposed coupling elements of each coupling member defining a throat between the body portions thereof which extends into an open mouth between the distal portions thereof which is narrower than the throat with the distal portion of each coupling element having a catch member on an internal part thereof defining with the opposed distal portion the open mouth, the arrangement being such that either one of the coupling elements of each of the coupling members can be received in the open mouth and throat of the other of the coupling members when the coupling members are opposed to each other, but that the distal portion of said one of the coupling elements of each of the coupling members cannot be withdrawn through the open mouth of the other of the coupling members without deforming one or both coupling members, characterised in that the distal portion (30) of each coupling element (26,28) has an external part (40) opposite said catch member (38) which has no catch member thereon.

By the present invention, although there are two coupling elements in each coupling member of the coupling device, there is only one pair of engaged catch members in each pair of opposed coupling members.

While the one coupling element of each of the engaged coupling members is received within the throat of the other coupling member, the other coupling element extends exteriorly of the other coupling member. The exterior surface of the body portion of the adjacent coupling element of the opposed coupling member may be notched, if desired, to partially accommodate the distal portion of said other coupling element. Each coupling element may be exteriorly notched as described.

The body portion of the opposed coupling elements may be substantially straight, in which case the coupling member may have a substantially U-shaped cross-section. Alternatively, the body portion of the opposed coupling elements may be curved, in which case the coupling member will have a substantially C-shaped cross-section.

The coupling members may be rigid, in which case it will be necessary to engage and disengage them by relative axial movement. Such a rigid coupling device may be used, for example, for connecting items of substantial mass. Preferably, however, the coupling members are formed of a resiliently deformable plastics material, in which case the coupling elements may be engaged and disengaged by relative axial displacement to separate them or, optionally also with a degree of relative axial displacement, by pulling on the engaged coupling elements with sufficient force to deform one or both coupling members and permit each previously-engaged coupling element to be withdrawn through the open mouth of the other of the coupling members. In an alternative embodiment, one of the coupling members may be rigid and the other resiliently deformable.

The coupling members may have a relatively small axial dimension for some uses, but in most cases they will have substantial longitudinal extent. Optionally, one or both of the coupling members may be axially interrupted, but particularly where the coupling device is being used as a plastic fastener strip, both coupling members will have substantially the same length and extend fully across an opening to be sealed.

The base of each coupling member may be secured in an appropriate manner to a respective one of the components to be coupled, for example by integral moulding, bonding, welding or by means of appropriate fasteners or securing devices. The base may take any suitable form depending upon the use of the coupling device, and how, if at all, the coupling member is or is to be secured to the respective component. However, in some uses it will be desirable to have plural laterally spaced coupling members on at least one of the components to be coupled, in which case the plural coupling members may be secured by any of the aforementioned arrangements to a backing strip which may itself be secured to the component by any suitable arrangement such as one or more of those described above. Such a backing strip or spine may be rigid, semi-rigid or flexible, as desired for the intended use and may comprise the component itself. In some uses it may be desirable to have plural components coupled to a single opposed component in which case the plural components may each have one or more coupling members secured thereto, whereas the single opposed component will have plural coupling members secured thereto equalling in number at least the number of coupling members associated with the plural components. It will be appreciated that the term "secured" includes the option of the coupling member being integrally moulded or otherwise integrally formed with the component or backing strip.

Plural coupling members secured to a component or to a backing strip must be spaced sufficiently from each other to permit a coupling element of an opposed coupling member to be received therebetween. This minimum spacing may vary depending on a variety of factors including the width, shape and flexibility of that coupling element of the opposed coupling member and the depth to which that coupling element is received between the adjacent coupling members. Preferably, that coupling element of the opposed coupling member engages both nearest coupling elements of the adjacent coupling members, optionally to form a seal therebetween. With one or more flexible coupling elements the spacing may be greater than the minimum spacing capable of receiving that coupling element of the opposed coupling member so as to more readily permit the deformation of the adjacent coupling members during engagement and disengagement of the opposed coupling members.

At least when the engaged coupling elements have their catch members fully engaged, the body portion of each engaged coupling element may be closely received in the open mouth of the other coupling member, optionally to form a seal therewith. Preferably the open mouth of each coupling member has a greater width than that of the body portion of the coupling element of the opposed coupling member whereby lateral displacement of the coupling element in the mouth portion may be able to occur under some circumstances. In such an embodiment, when the body portion of each engaged coupling element is in contact with the distal portion of the other of the opposed coupling elements of the opposed coupling member, only tips of the catch members may remain in contact to resist withdrawal of the respective distal portion through the open mouth of the opposed coupling member without deforming the coupling members.

Preferably, the distal portions of the opposed coupling elements are undercut within the throat of the coupling member to define the catch members.

Advantageously, the opposed surfaces of the distal portions defining the open mouth of each coupling member are inclined towards each other from the outer end of the open mouth to facilitate insertion of the distal portion of the opposed coupling member therethrough. Most preferably, said opposed surfaces are curved to define lead-in surfaces which facilitate both insertion and withdrawal of the distal portion through the open mouth, with the narrowest width of the open mouth being defined intermediate the extremities of the opposed surfaces. In a preferred embodiment, the opposite, exterior part of each distal portion defines a smooth continuous curve with the exterior surface of the body portion, and in a most preferred embodiment the interior and exterior surfaces of each distal portion are curved substantial mirror images of each other meeting at a distal edge.

The opposed coupling members may differ in size or shape or both, provided they perform as required, but most advantageously they are identical in size and shape. The actual size of the opposed coupling members may vary from large for heavy engineering use down to substantially invisible to the naked eye (ie. microscopic) for use in micro and bioengineering, including microelectronics. The coupling device of the invention may be used in a wide variety of technologies, including book construction, flexible and other forms of packaging, strapping, rotary tools and other rotary applications, general engineering, microengineering and coupling devices in general.

In one embodiment, two longitudinally extensive coupling members may be sealingly coupled to each other to form a hose having one or, preferably, two bores. Two such coupling members need not couple any other components together so that the hose itself forms the coupling device in accordance with the invention. Fluid or other material, or, for example, a cable or optical fibre may be passed through or along the bore or any of the bores.

In another embodiment of use, one or more of the coupling devices may secure a removable or replaceable portion of a wound dressing to one or more fixed portions of the wound dressing which are adapted to be adhered to the skin or other tissue around a wound for a longer period of time. If plural coupling members are secured to one or both of the removable or replaceable portion and the one or more fixed portions, the coupling device can be used to selectively pull opposed edges of the wound together. This may in some circumstances alleviate or avoid the use of other more intrusive wound repair systems such as stitches and staples.

Mechanical fixing of parts and components in micro systems technology (MST) and micro electromechanical systems (MEMS) packages is an application in the microengineering area for the coupling device of the invention.

MST and MEMS devices often require the joining of parts that have been fabricated separately. An important aspect of the joining process is often the requirement to align parts with high precision, usually to tolerances of the order of a few micrometres, without causing damage to the delicate features and structures within the MST or MEMS device.

The joint may need to have one or more of several properties including mechanical strength, hermetic sealing against positive or negative pressure (gas or liquid), electrical or radio frequency noise isolation and temperature stability. Adhesive, thermal or electrical fusion bonding may not always be appropriate as fine features in the MST or MEMS device may be damaged by such processes. For example, micro fluidic channels must be enclosed using a leak-tight seal without blocking the internal channels with adhesive or distorting the channels with heat.

A mechanical coupling device in accordance with the invention may be used to facilitate sealing of MST and MEMS devices or may be used as a first-stage alignment and fixing system that holds the MST or MEMS device together and protects the internal components and structures prior to some other packaging or sealing method, such as potting in epoxy resin, being applied to the assembled device.

Various embodiments of a coupling device in accordance with the invention will now be described, by way of example only, with references to the accompanying drawings, in which:
Figure 1 is an elevational view of a coupling device comprising two opposed arrays of coupling members ready for coupling;
Figure 2 shows the same two arrays of coupling members after coupling has been completed;
Figure 3 illustrates how the coupling members can still be coupled when they are displaced by one half pitch;
Figure 4 shows a modification of Figure 1 in which the coupling device includes guide rails;
Figure 5 illustrates in elevational form a slightly modified coupling member;
Figure 6 illustrates two opposed longitudinally extensive arrays of coupling members;
Figure 7 illustrates a coupling device in accordance with the invention being used to form a book;
Figures 8(a) to 8(c) illustrate coupling devices in accordance with the invention being used as plastic fastener strips for packaging;
Figure 9 illustrates the use of a plurality of the coupling members for securing an abrasive disc to a disc pad;
Figure 10 illustrates in part an annulus having two arrays of radially extending coupling members for securement to a second component;
Figures 11 (a) to 11(c) illustrate, respectively, an end view, top view and bottom view of a centre disc for a flexible Oldham-type coupling; and
Figure 12 illustrates a packaging system having a coupling device in accordance with the invention which may be for a micro device.

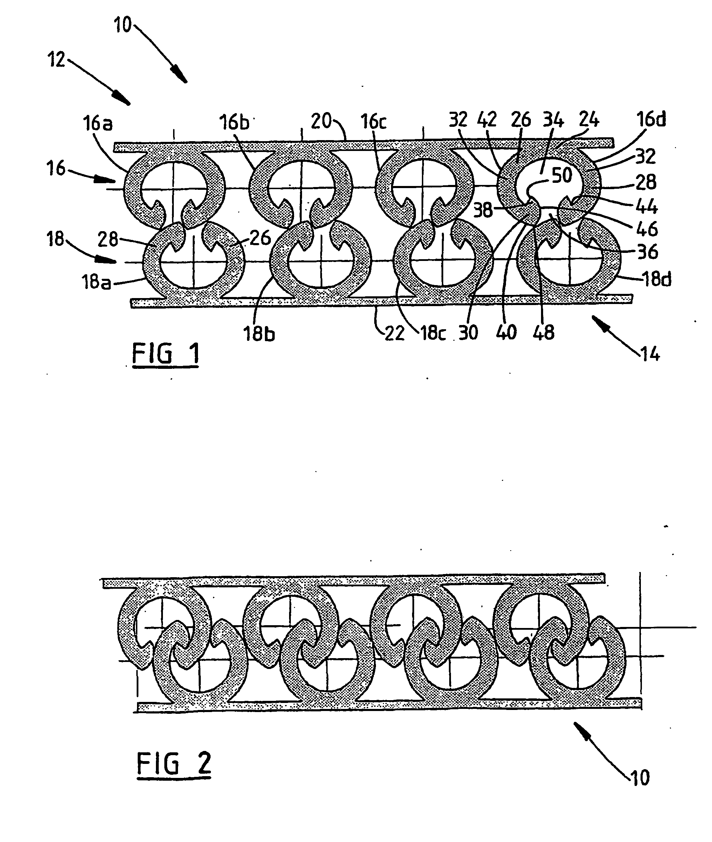

Referring to Figures 1 and 2, a coupling device 10 comprising two arrays 12 and 14 of coupling members 16 and 18, respectively, is illustrated. For the purposes of illustration, each of the arrays 12 and 14 comprises four coupling members, but each may include fewer (down to one) or more. Each of the arrays is moulded, extruded or otherwise formed in a resiliently flexible thermoplastic material such as high density polyethylene, and the array 12 has the four coupling members 16a-d integrally formed with a flexible backing strip 20, while the array 14 has the four coupling members 18a-d integrally formed with a backing strip 22.

Each of the coupling members 16a-d and 18a-d is identical to the others and, for convenience, only one will be described.

Each coupling member has a base portion 24 joined to the respective backing strip and opposed curved coupling elements 26 and 28 extending from the base portion whereby the cross-section and/or end view of the coupling member is substantially C-shaped. Each coupling element 26 and 28 has a distal portion 30 and a body portion 32 between the base portion 24 and the distal portion 30. The opposed coupling elements 26 and 28 of each coupling member define a throat 34 between the body portions which extends into an open mouth 36 between the distal portions 30 of the coupling elements 26 and 28. The open mouth is narrower than the throat 34.

The distal portion 30 of each coupling element 26 and 28 has a catch member 38 on an internal part thereof defining with the opposed distal portion 30 the open mouth 36. No catch member is provided on an opposite external part 40 of each distal portion, and the external part 40 forms a continuous curve with the exterior surface 42 of the body portion.

The distal portion 30 is undercut at 44 to define the catch member 38. The internal surface 46 of the distal portion, with which the opposite distal portion 30 defines the open mouth 36, is curved with the narrowest section of the open mouth being defined intermediate the extremities of the distal portion. These extremities define at the outer end a distal edge 48 of the coupling element and at the inner end a tip 50 of the catch member 38. The curves of the external part 40 and internal surface 46 from the distal edge 48 may be of substantially the same radii but opposite to each other. The distal edge 48 and tip 50 are both shown as relatively sharp, but one or both may be rounded if desired.

The arrangement of the opposed coupling members 16 and 18 is such that either one of the coupling elements 26 and 28 of each of the coupling members can be received in the open mouth 36 and throat 34 of the opposed coupling member, but that the distal portion 30 of that coupling element of each of the opposed coupling members cannot be withdrawn through the open mouth 36 of the other of the coupling members without deforming one or both coupling members.

As illustrated in Figure 1, the arrays 12 and 14 of the coupling members 16 and 18 are arranged in opposed manner such that the coupling element 28 of each coupling member is intended to be received through the open mouth 36 into the throat 34 of the opposed coupling member by flexing of the coupling elements. In this condition, the portions of the internal surfaces 46 of the distal portions 30 of the coupling elements 28 adjacent the distal edges 48 abut each other while the distal edge 48 of the coupling element 26 abuts the external part 40 of the coupling element 28. As the coupling members 16 and 18 are pushed towards each other, the coupling elements 26 and 28 of each coupling member will open out so as to permit the distal portion 30 of the coupling element 28 to pass through the open mouth 36 of the opposed coupling member by sliding engagement of the internal surfaces 46 of the coupling element 28. At the same time, the distal portion 30 of the coupling element 26 slides down the exterior surface 42 of the coupling element 28 of the opposed coupling member, and the adjacent coupling members of each array 12 and 14 are spaced sufficiently to accommodate the coupling element 26 of the opposed coupling member when the coupling element 28 is received in the throat 34 of the opposed coupling member.

As the tips 50 of the catch members 38 move beyond each other in the opposed throats 34, the resilience of the coupling elements causes the opposed coupling elements of each coupling member to move towards each other, whereby the opposed catch members 38 engage each other as shown in Figure 2. In this condition, as shown, the distal portion 30 of the external coupling element 26 abuts the exterior surface 42 of the coupling element 28 of the opposed coupling member, while the exterior surface 42 of the coupling element 26 of one of the coupling members abuts the exterior surface 42 of the coupling element 26 of the adjacent opposed coupling member (except where the coupling element 26 is an end coupling element as with coupling elements 16a and 18d).

Disengagement of the coupling members is by pulling the arrays 12 and 14 of the coupling members apart with sufficient force to deform the catch members 38, optionally with a sheer or twisting force. Alternatively, and compulsorily if the coupling elements are rigid, the opposed coupling members may be engaged and disengaged by relative axial sliding displacement when they are aligned laterally as shown in Figure 2.

If a smaller disconnecting force is required between the opposed coupling members, the number of coupling members in one or both arrays 12 and 14 may be reduced. It will be noted that for each pair of opposed coupling members 16 and 18, there is only one pair of engaged catch members 38. The coupling elements which are not received within the throat of the opposed coupling member may provide some stability to the engaged coupling members, but the catch member 38 thereof is not engaged.

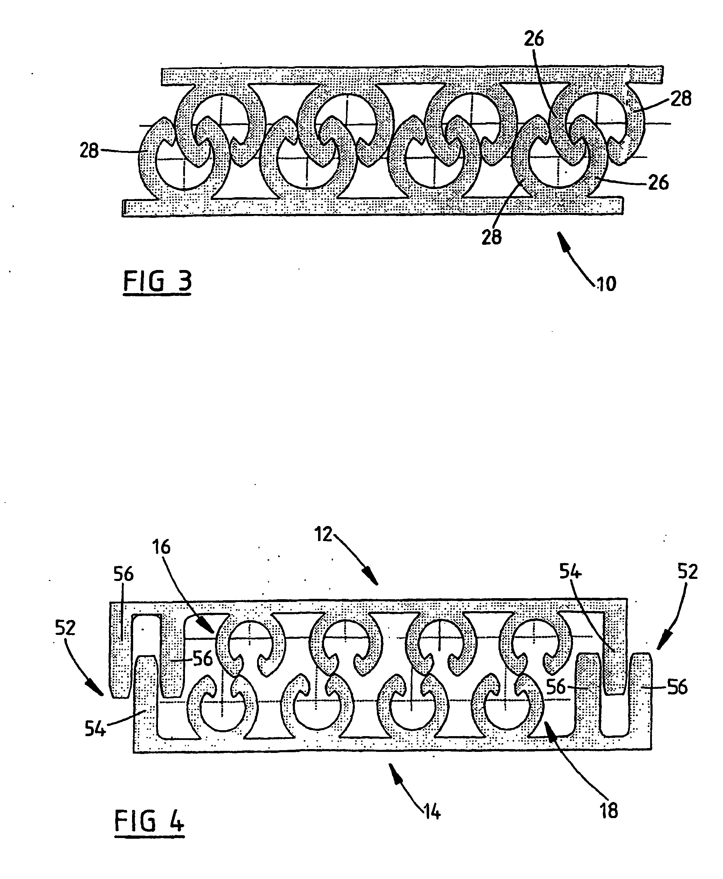

Figure 3 illustrates how the arrays 12 and 14 may be displaced laterally by a half pitch yet still permit coupling of the opposed coupling members, using the coupling elements 26 rather than the coupling elements 28 as in Figures 1 and 2. This and the curved arrangement of the coupling elements 26 and 28 means that coupling of the opposed arrays 12 and 14 may be readily achieved "blind", even though there may be substantial misalignment between the opposed coupling members.

As may be seen in Figures 2 and 3, the coupling elements 26 and 28 of each pair of opposed engaged coupling members contact each other at a variety of locations and may thereby form a seal between those coupling members. Additionally, referring for example to Figure 2, the contact between the exterior surfaces 42 of the coupling elements 26 of adjacent opposed coupling members 18a and 16b, 18b and 16c, and 18c and 16d can supplement the seals between the opposed engaged coupling members.

As may also be seen in Figures 2 and 3, even if the catch members 38 of the coupling elements received in the throats of the opposed coupling members are not engaged, a seal may be formed between the opposed coupling members in a variety of locations by contact of one coupling element with a coupling element of the opposed array.

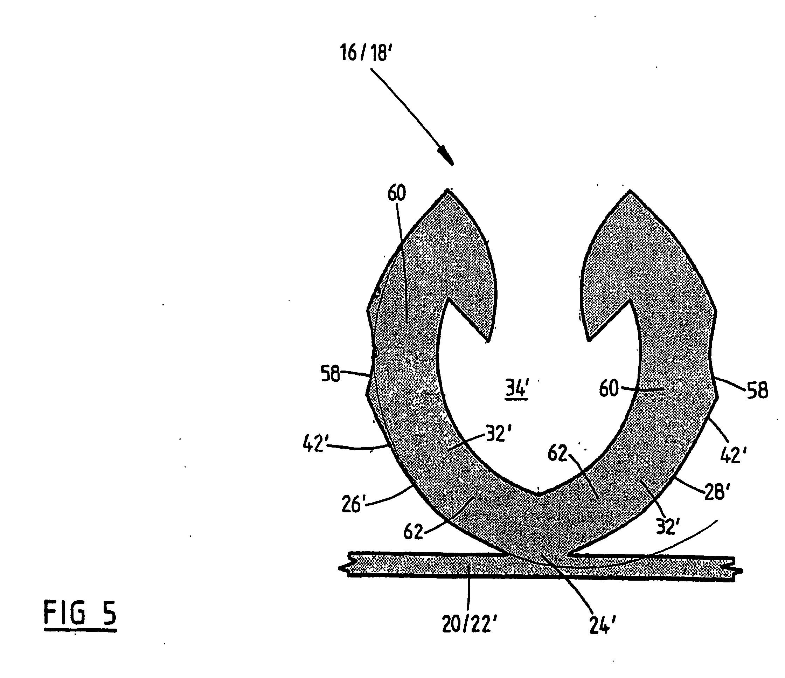

Figure 4 shows a modification of the coupling device 10 in which the only variation is the provision of guide members 52 to ensure a desired alignment of the coupling members 16 and 18, in this case as in Figure 3. The guide members 52 at each end of the arrays 12 and 14 comprise a single rail 54 at one end of each array adapted to be received between spaced rails 56 of the opposed array.
Referring to Figure 5, a variation of the coupling members 16 and 18 is shown as 16/18'. In this variation, the base portion 24' connecting the coupling member 16/18' to the backing strip 20/22' has a narrower extent than in Figures 1 to 4, potentially increasing the resilient flexibility of the coupling elements 26' and 28'.

Also in Figure 5, the contour of the exterior surface 42' of each coupling element is modified to provide a notch 58 in a region 60 of the body portion 32' of generally increased thickness compared to the proximal part 62 of the body portion. The notch 58 in one of the coupling elements 26' and 28' is intended in use to partially accommodate the distal portion 30 of the coupling element of the opposed coupling member which is not received in the throat 34'. This may increase the stability of the coupling by providing a degree of snap-engagement of the distal portion 30 of the external coupling element of the opposed coupling member with the notch 58.

It will be appreciated that in Figures 1 to 5 an end view of the coupling member(s) is shown, giving no indication of the axial extent of the coupling member(s). The axial extent may be as short as necessary or as long as necessary to provide the desired coupling.

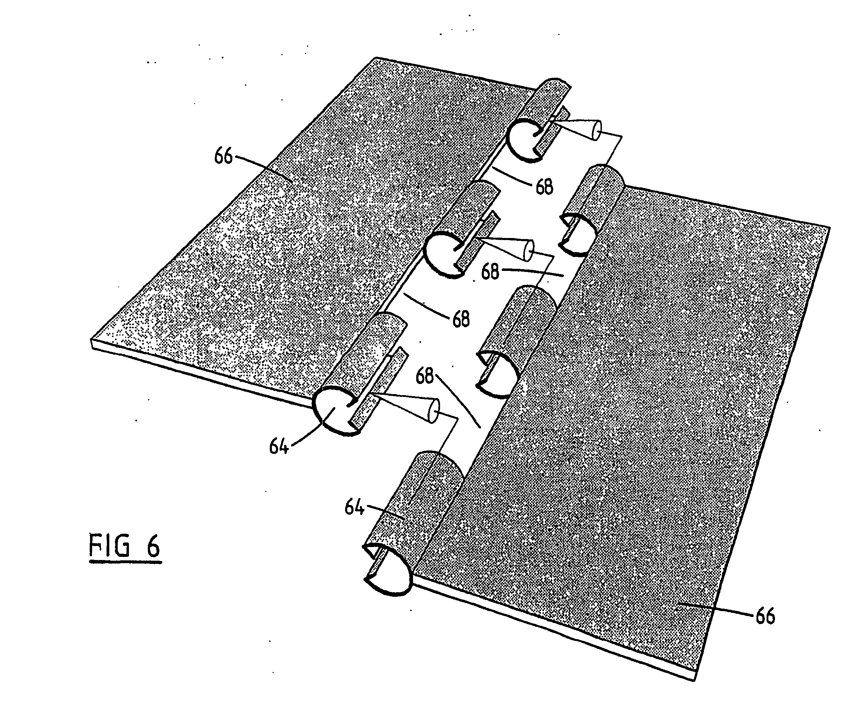

In Figure 6 opposed longitudinally extensive coupling members 64 having at least substantially the same profile as the coupling members 16 and 18 are secured by, for example, welding to respective components which as illustrated are in the form of plates 66 but may take any other form. The coupling members 64 are connected to an edge of the respective plate, and each coupling member 64 is interrupted to define two gaps 68 therein of substantially the same or greater length as the equilength remaining portions of the coupling members. This arrangement permits coupling of the remaining portions of the opposed coupling members 64 by substantial axial alignment of the two coupling members and subsequent axial displacement so that the three remaining portions of one coupling member 64 cooperate as illustrated in Figures 2 or 3 with the three remaining portions of the other coupling member 64. The gaps 68 permit only partial axial separation of the coupling members 64, whereas if the coupling members were continuous they would have to be initially axially separated by their full length or, in the case of resiliently flexible coupling members, coupled as described with reference to Figures 1 and 2 or 3.

The coupling members 64 may if desired be formed from a rigid material such as steel and may, for example, be rolled formed.

In a preferred modification of Figure 6 only part of the coupling members 64 is omitted or removed, so that a part of the body portion of the coupling elements extends in the gaps 68.

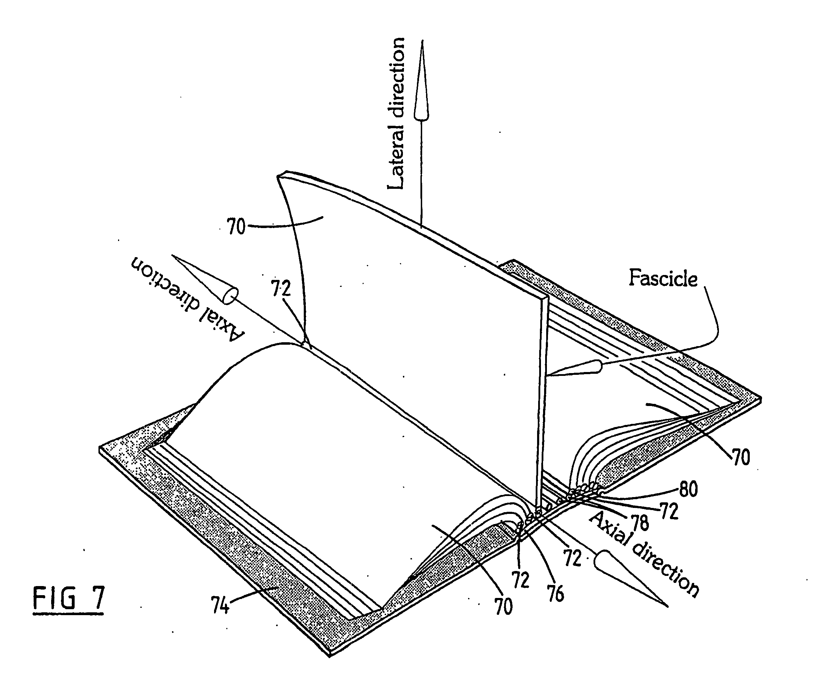

Referring now to Figure 7, there is shown an advantageous use of a coupling device in accordance with the invention in book construction. The coupling device is illustrated schematically, but each coupling member may for example be as described with reference to Figures 1 and 2.

In traditional book construction, the separately formed sections of the book to be bound are called fascicles. The fascicles are sewn, glued or stapled to form their common joint, the flexible spine of the book. The spine thus holds all of the fascicles of the book firmly and permanently together and, by virtue of its flexibility, allows the separate fascicles of the book to fall open for easy perusal and be turned over from page to page by the reader at will. The cover of the book, consisting of a single piece of paper or card, or two boards joined by a hollow back, is known as a case.

As illustrated in Figure 7, each fascicle 70 is glued or otherwise secured to a respective coupling member 72, while the case 74 has an array 76 of parallel laterally spaced opposed coupling members 78 secured to a backing strip 80, for example by integral extrusion, which forms or is secured to the back of the case 74.

By this arrangement, the fascicles 70 that make up the text body of the book can be individually detached from the spine of the book and, just as easily and separately, attached to the spine. This means that individual fascicles can be readily replaced, for example, with updated chapters, or may be temporarily removed for easier carriage and use elsewhere.

The backing strip 80 is flexible for this use, meaning that the integrally extruded coupling members 78 are also flexible. Thus, the action of engaging the single coupling members 72 with the array 76 may be achieved by purely axial alignment and displacement, by purely lateral displacement or by a combination of these. For the reasons described with reference to the embodiment in Figures 1 to 3, misalignment of selected opposed coupling members may still result in coupling of the single coupling member 72 with another of the plural coupling members 78. Thus, an excessive number of coupling members 78 may be provided compared to the required number of single coupling members 72, meaning that the fascicles 70 may be readily connected to the case 74 "blind".

Disengagement of the fascicles 70 from the case 74 may be performed using any of the options described above for their engagement, although preferably neither engagement nor disengagement involves purely lateral displacement.

Referring now to Figure 8, three options for using opposed arrays of the coupling members described with reference to Figures 1 to 3 are shown for lap or butt seals in packaging: a wrapping sheet lap closure in Figure 8(a), an envelope lap closure in Figure 8(b) and a bag lap closure in Figure 8(c). The coupling members are illustrated schematically in Figure 8 - as described with reference to Figures 1 to 3, the engaged and adjacent opposed coupling members will contact each other to form a series of seals between the opposed coupling members. In each of Figures 8(a) to 8(c), the backing strip connecting each array of closure members may be, for example, welded or otherwise bonded to the material of the wrapping, envelope, bag, box or carton, and both of the arrays of opposed coupling members may, but need not if no seal is required, extend across the full length of the opening being closed by the closure device.

In this embodiment as applied to macro applications, one array of the coupling device may be used for coupling a sheet, such as a tarpaulin, concrete underlay or tenting material, to another sheet having a corresponding opposed array of coupling members. Depending upon the strength of coupling required, each array may comprise only one coupling member or more. It will be evident however that, if a reliable seal against air or other gas or liquid pressure is required, more than one coupling member in each array may be desirable. Similar considerations apply for micro sheet connections, although plural coupling members on at least one of the sheets may be desirable to enhance coupling under "blind" conditions. The use of the described coupling members permits the sheets to be coupled in a variety of different orientations because the coupling elements in each coupling member are identical.

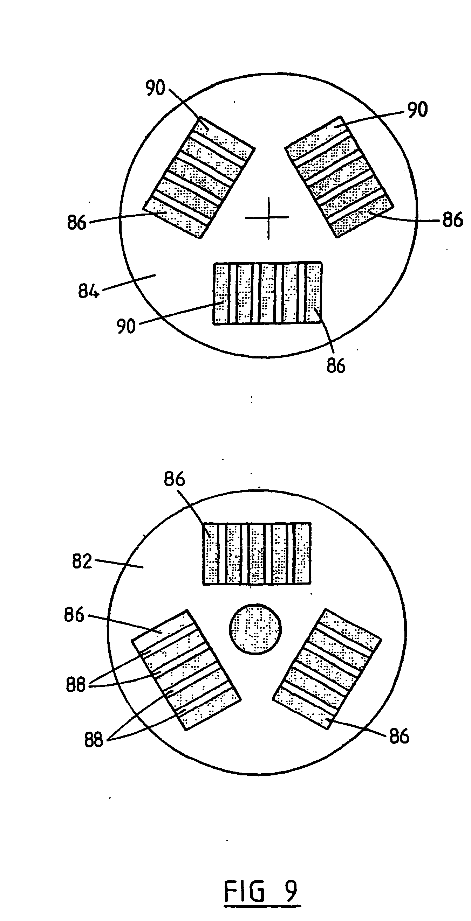

Figure 9 illustrates the use of multiple arrays of opposed coupling members for use in securing two separable members for rotation. As illustrated, the two separable members comprise a disc pad 82 and an abrasive disc 84, both illustrated schematically, for use on a rotary or orbital sander. Each of the disc pad and abrasive disc has three arrays 86 of two coupling members 88 each, for example, as described with reference to Figures 1 to 3. The arrays 86 are arranged on the pad and disc with an imaginary centre line between and parallel to the coupling members 88 extending at least substantially on a radius of the pad or disc. In this embodiment, the coupling members 88 on the disc pad 82 may conveniently be made of a substantially rigid material such as copper, while the coupling members 88 secured to the disc 84 may be formed of a flexible plastic material with the backing strip 90 bonded to the disc, for example by an appropriate adhesive.

The abrasive disc maybe secured to and removed from the disc pad 84 by lateral engagement, optionally with a degree of sheer along each of the aforementioned radii. This embodiment may be adopted for oscillatory or orbitally movable disc pads as well as for disc pads which are solely rotatable.

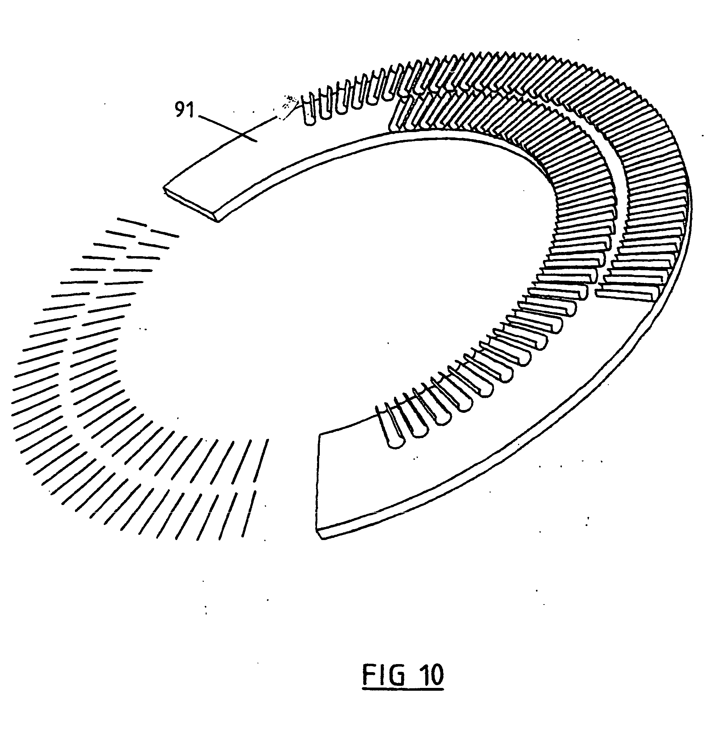

A variation of the arrangement illustrated in Figure 9 is shown in Figure 10 in which the disc 84 or some other disc for connection to a component is shown as an annulus 91 (partially illustrated schematically), but this is not necessary. Carried on the annulus 91 are two radially spaced annular arrays of coupling members which may be as described with reference to Figures 1 to 3, in which each elongate coupling member extends on a radius of the annulus 91. Each array is shown schematically but is formed by extruding a tube of flexible plastics material with the coupling members integrally formed on the exterior surface of the tube and extending parallel to the axis of the tube. The tube accordingly acts as an integral backing strip (not shown) for each array. The tube length is equal to the desired radial length of the array or that length is separated from a tube of greater length.

The selected length of tube is then flattened so that one axial end of the tube forms the radially inner end of the annular array of coupling members and the opposite axial end forms the radially outer end of the array. This action will tend to compress the backing strip arcuately at the radially inner end and expand the back strip arcuately at the radially outer end.

Two tubes of appropriate different diameters will be required to form the two arrays in this way, and the arrays may be bonded or otherwise secured to the annulus 91. Corresponding arrays will be required on a second disc or annulus to provide the rotational drive between the two components, similar to the arrangement described with reference to Figure 9.

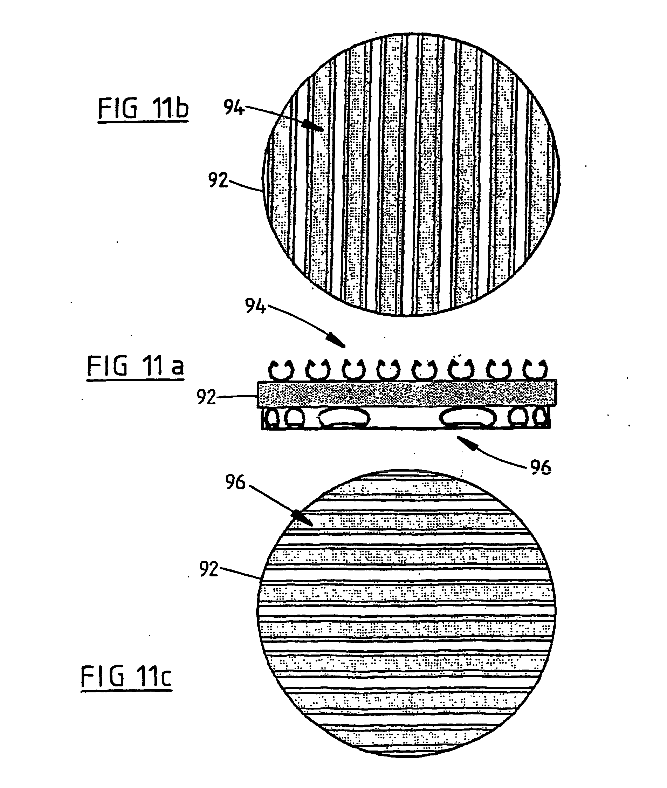

Referring to Figure 11, there is illustrated a centre piece 92 for a flexible Oldham-type coupling. An Oldham coupling is one in which rotary movement on a first axis can be transferred to a second, axially offset axis. The axes may be slightly out of parallel as well as offset, but the non-alignment of the axes is taken up by lateral sliding motion of the disc pad 92 relative to both axes as it rotates. On one side, the disc-shaped centre piece 92 has a first array 94 of the coupling members extending parallel to each other across the disc, while on the opposite side, there is a second array 96 of the coupling members extending parallel to each other but perpendicularly to the coupling members in the array 94. Each array 94 and 96 is connected to a corresponding array of coupling members associated with the axles respectively defining the axis on each side and the disc 92 slides relative to those corresponding arrays as one of the axles is rotated in order to rotate the other axle. The core of the disc 92 is advantageously flexible or resilient to also accommodate misalignment of the axes.

The first and second arrays 94 and 96 of coupling members may alternatively be as described with reference to Figure 9 or Figure 10. In another embodiment, the relationship between the top and bottom elements can be offset at other than 90° as shown in Figure 11.

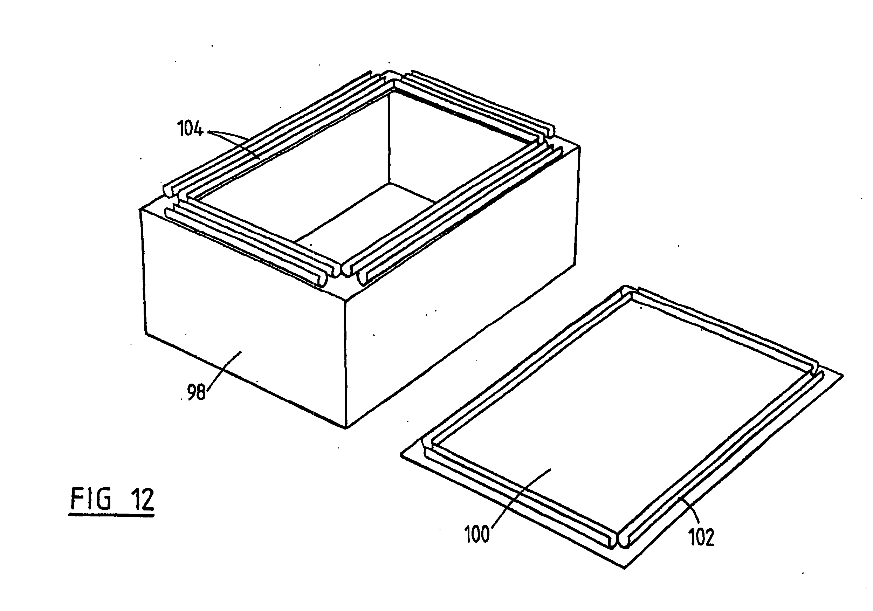

The box 98 and lid 100 illustrated in Figure 12 are merely exemplary of the use of a coupling device in accordance with the invention in the fields of microengineering, micro-microengineering and, even smaller, molecular mechanical engineering. One of the most important aspects of these uses is that the smaller the nominal dimensions of the elements or components to be connected, the larger (relatively speaking) the manufacturing tolerances need to be for the couplings. A coupling device in accordance with the invention and using at least two parallel coupling members on one of the components is readily adapted to this environment because of the multiple relationships available between the coupling member or any one of the coupling members on the other component and the plural coupling members on the one component, as described with reference to Figures I to 3. Alternatively an opposed pair of coupling members may be used, particularly if tolerances are very tight.

In Figure 12, a single coupling member 102 is provided along each edge of the lid on the interior surface thereof and two parallel coupling members 104 are provided along the upper edges of the box 98. As will be appreciated from the above, the lid may, be located on the box by the coupling members in a variety of different positions so that perfect alignment of the box and lid is not necessary. The coupling members 102 and 1.04 could be continuous around the corners of the lid and box, or the corners may be sealed, if necessary, by suitable means. The coupling members 102 and 104 are illustrated schematically, and each has a cross-section as described with reference to Figure 1.

The container defined by the box 98 and lid 100 may act as packaging for a micromechanical component, for example. The micromechanical component may be formed by a variety of techniques, including silicon fabrication technology, laser or X-ray micromachining, chemical or plasma etching, and electro-discharge machining. All of these processes permit the coterminous manufacture of multiple micromachining components with relative ease, but eventually the components have to be handled individually, at which stage they may be packaged in or as part of the container. The coupling device of the invention may readily permit accurate temporary location of the lid on the box or, with suitable provision of coupling members, of the component in or as part of the container. Epoxy resin or other bonding agent may then be used for permanent location. The bonding agent can be judiciously injected into the coupling device for permanent fixing.

It will be appreciated that many other uses of the coupling device in accordance with the invention are possible. One such other use is in the area of mosaic construction, when slabs, tiles, blocks or bricks are connected to each other and/or to a backing layer or sheet to form a connected layer. The mosaic components may be joined to each other and/or to the backing layer or sheet by respective coupling devices. Depending upon the structure of the coupling devices, these may permit individual mosaic components to be removed and replaced as desired.

Those skilled in the art will appreciate that the invention described herein is susceptible to variations and modifications other than those specifically described, including as to the specific shape of the coupling members. It is to be understood that the invention includes all such variations and modifications which fall within its spirit and scope. The invention also includes all of the steps and features referred to or indicated in this specification individually or collectively, and any and all combinations of any two or more of said steps and features.

Throughout this specification, unless the context requires otherwise, the word "comprise", and variations such as "comprises" and "comprising", will be understood to imply the inclusion of a stated integer or step or group of integers or steps but not the exclusion of any other integer or step or group of integers or steps.

The reference to any prior art in this specification is not, and should not be taken as, an acknowledgment or any form of suggestion that that prior art forms part of the common general knowledge in Australia or elsewhere.

## Claims

1. A coupling device (10) comprising two coupling members (16,18) each having a base portion (24) and opposed coupling elements (26,28) extending from the base portion (24), each coupling element (26,28) having a distal portion (30) and a body portion (32) between the base portion (24) and the distal portion (30) and the opposed coupling elements (26,28) of each coupling member (16,18) defining a throat (34) between the body portions (32) thereof which extends into an open mouth (36) between the distal portions (30) thereof which is narrower than the throat (34) with the distal portion (30) of each coupling element (26,28) having a catch member (38) on an internal part thereof defining with the opposed distal portion (30) the open mouth (36), the arrangement being such that either one of the coupling elements (26,28) of each of the coupling members (16,18) can be received in the open mouth (36) and throat (34) of the other of the coupling members when the coupling members are opposed to each other, but that the distal portion (30) of said one of the coupling elements of each of the coupling members cannot be withdrawn through the open mouth of the other of the coupling members without deforming one or both coupling members, **characterised in that** the distal portion (30) of each coupling element (26,28) has an external part (40) opposite said catch member (38) which has no catch member thereon.

2. A coupling device according to Claim 1 wherein, when said coupling members (16,18) are engaged one coupling element (26,28) of each of the engaged coupling members is received within the throat (34) of the other coupling member, the other coupling element extending exteriorly of the other coupling member.

3. A coupling device according to Claim 2, wherein the body portion of the coupling element of the coupling member has an exterior surface (42) which is notched (58) to partially accommodate the distal portion of said other coupling element.

4. A coupling device according to any preceding claim wherein the coupling members (16, 18) are substantially rigid and engagement and disengagement is effected by relative axial movement.

5. A coupling device according any one of claims 1 to 3 wherein the coupling members (16,18) are formed of a resiliently deformable plastics material and are engaged and disengaged by relative axial displacement to separate them and/or with a degree of relative axial displacement, by pulling on the engaged coupling elements (26,28) with sufficient force to deform one or both coupling members and permit each previously-engaged coupling element to be withdrawn through the open mouth of the other of the coupling members.

6. A coupling device according to any one of claims 1 to 3 wherein one of the coupling members (16,18) is rigid and the other resiliently deformable.

7. A coupling device according to any preceding claim wherein there is provided two arrays (12,14) of said coupling members, the base portion (24) of each said coupling member in one said array (12) being operatively secured to a first backing strip (20) and the base portion of each said coupling member in the other said array (14) being operatively secured to a second backing strip (22).

8. A coupling device according to claim 7 wherein the base portion (24) of each said coupling member in said one array (12) are formed integrally with said first backing strip (20) and the base portion (24) of each said coupling member in the other said array (14) are formed integrally with said second backing strip (22).

9. A coupling device according to any one of claims 1 to 8 wherein there is provided two arrays (64) of said coupling members, the coupling members in each array being generally axially aligned and spaced from one another the base portion of the coupling members in each array being operatively secured to a respective plate (66) along a side edge thereof.

## Patentansprüche

1. Kupplungsvorrichtung (10) mit zwei Kupplungsgliedern (16, 18), von denen jedes einen Basisabschnitt (24) und gegenüberliegende Kupplungselemente (26, 28) aufweist, welche sich vom Basisabschnitt (24) weg erstrecken, wobei jedes Kupplungselement (26, 28) einen distalen Abschnitt (30) und einen Rumpfabschnitt (32) zwischen dem Basisabschnitt (24) und dem distalen Abschnitt (30) besitzt und die gegenüberliegenden Kupplungselemente (26, 28) jedes Kupplungsglieds (16, 18) zwischen den Rumpfabschnitten (32) derselben eine Kehle (34) festlegen, die sich in eine offene Mündung (36) zwischen den distalen Abschnitten (30) derselben hinein erstreckt, welche schmäler als die Kehle (34) ist, wobei der distale Abschnitt jedes Kupplungselements (26, 28) ein Rastglied (38) an einem inneren Abschnitt aufweist, der mit dem gegenüberliegenden distalen Abschnitt (30) die offene Mündung (36) festlegt, wobei die Anordnung derart getroffen ist, dass eines der Kupplungselemente (26, 28) jedes Kupplungsglieds (16, 18) in der offenen Mündung (36) und Kehle (34) des anderen Kupplungsglieds aufgenommen werden kann, wenn die Kupplungsglieder einander gegenüberliegen, aber der distale Abschnitt (30) des einen Kupplungselements jedes Kupplungsglieds nicht ohne Verformung zumindest eines der beiden Kupplungsglieder durch die offene Mündung des anderen Kupplungsglieds abgezogen werden kann, **dadurch gekennzeichnet, dass** der distale Abschnitt (30) jedes Kupplungselements (26, 28) gegenüber dem Rastglied (38) einen äußeren Abschnitt (40) aufweist, auf dem kein Rastglied vorgesehen ist.

2. Kupplungsvorrichtung nach Anspruch 1, worin bei in Eingriff befindlichen Kupplungsgliedern (16, 18) ein Kupplungselement (26, 28) jedes der in Eingriff befindlichen Kupplungsglieder in der Kehle (34) des anderen Kupplungsglieds aufgenommen ist, wobei sich das andere Kupplungselement außerhalb des anderen Kupplungsglieds erstreckt.

3. Kupplungsvorrichtung nach Anspruch 2, worin der Rumpfabschnitt des Kupplungselements des Kupplungsglieds eine Außenfläche (42) aufweist, die eingekerbt (58) ist, um den distalen Abschnitt des anderen Kupplungselements teilweise aufzunehmen.

4. Kupplungsvorrichtung nach einem der vorhergehenden Ansprüche, worin die Kupplungsglieder (16, 18) im Wesentlichen starr sind und das In-Eingriffkommen sowie das Außer-Eingriffkommen durch eine relative Axialverschiebung bewirkt wird.

5. Kupplungsvorrichtung nach einem der Ansprüche 1 bis 3, worin die Kupplungsglieder (16, 18) aus einem nachgiebigen, verformbaren Kunststoff gefertigt sind und durch eine relative Axialverschiebung zwecks Auseinanderbringens und/oder mit einem Grad an relativer Axialverschiebung in Eingriff sowie außer Eingriff gebracht werden, indem an den in Eingriff befindlichen Kupplungselementen (26, 28) mit ausreichender Kraft gezogen wird, so dass ein oder beide Kupplungsglied(er) verformt werden und jedes zuvor in Eingriff stehende Kupplungselement durch die offene Mündung des anderen Kupplungsglieds abgezogen werden kann.

6. Kupplungsvorrichtung nach einem der Ansprüche 1 bis 3, worin eines der Kupplungsglieder (16, 18) starr und das andere nachgiebig verformbar ist.

7. Kupplungsvorrichtung nach einem der vorhergehenden Ansprüche, worin zwei Gruppen (12, 14) von Kupplungsgliedern vorgesehen sind, wobei der Basisabschnitt (24) jedes dieser Kupplungsglieder einer Gruppe (12) an einem ersten Trägerstreifen (20) operativ befestigt ist und der Basisabschnitt jedes Kupplungsglieds der anderen Gruppe (14) am zweiten Trägerstreifen (22) operativ befestigt ist.

8. Kupplungsvorrichtung nach Anspruch 7, worin der Basisabschnitt (24) jedes der Kupplungsglieder einer Gruppe (12) mit dem ersten Trägerstreifen (20) integral ausgebildet ist und der Basisabschnitt (24) jedes der Kupplungsglieder der anderen Gruppe (14) mit dem zweiten Trägerstreifen (22) integral ausgebildet ist.

9. Kupplungsvorrichtung nach einem der Ansprüche 1 bis 8, worin zwei Gruppen (64) von Kupplungsgliedern vorgesehen sind, wobei die Kupplungsglieder jeder Gruppe im Allgemeinen axial miteinander fluchten und voneinander beabstandet sind, wobei der Basisabschnitt der Kupplungsglieder jeder Gruppe operativ an einer entsprechenden Platte (66) entlang einer Seitenkante derselben befestigt ist.

## Revendications

1. Dispositif de couplage (10) comprenant deux membres de couplage (16, 18) ayant chacun une portion de base (24) et des éléments de couplage opposés (26, 28) partant de la portion de base (24), chaque élément de couplage (26, 28) ayant une portion distale (30) et une portion de corps (32) située entre la portion de base (24) et la portion distale (30), et les éléments de couplage opposés (26, 28) de chaque membre de couplage (16, 18) définissant une gorge (34) entre les portions de corps (32) de celui-ci, gorge qui se prolonge en une bouche ouverte (36) entre les portions distales de celui-ci, bouche qui est plus étroite que la gorge (34), la portion distale (30) de chaque élément de couplage (26, 28) ayant un élément de cliquet (38) sur une partie interne définissant la bouche ouverte (36) avec la portion distale opposée (30), l'agencement étant tel que l'un ou l'autre des deux éléments de couplage (26, 28) de chacun des membres de couplage (16, 18) puisse être reçu dans la bouche ouverte (36) et la gorge (34) de l'autre des éléments de couplage lorsque les membres de couplage sont en vis-à-vis l'un de l'autre, mais que la portion distale (30) dudit premier des éléments de couplage de chacun des membres de couplage ne puisse pas être retirée par la bouche ouverte de l'autre des éléments de couplage sans déformer l'un des membres de couplage ou les deux, ***caractérisé en ce que*** la portion distale (30) de chaque élément de couplage (26, 28) possède une partie extérieure (40) opposée audit élément de cliquet (38) qui ne possède pas sur elle d'élément de cliquet.

2. Dispositif de couplage selon la revendication 1, dans lequel, lorsque lesdits membres de couplage (16, 18) sont mis en prise, un premier élément de couplage (26, 28) de chacun des membres de couplage mis en prise est reçu dans la gorge (34) de l'autre membre de couplage, l'autre élément de couplage s'avançant extérieurement à l'autre membre de couplage.

3. Dispositif de couplage selon la revendication 2, dans lequel la portion de corps de l'élément de couplage du membre de couplage possède une surface extérieure (42) qui est entaillée (58) pour recevoir partiellement la portion distale dudit autre élément de couplage.

4. Dispositif de couplage selon l'une quelconque des revendications précédentes, dans lequel les membres de couplage (16, 18) sont substantiellement rigides et l'engagement et le dégagement sont effectués par un mouvement axial relatif.

5. Dispositif de couplage selon l'une quelconque des revendications 1 à 3, dans lequel les membres de couplage (16, 18) sont formés d'un matériau plastique déformable résilient et sont engagés et dégagés par déplacement axial relatif pour les séparer et/ou avec un degré de déplacement axial relatif, par traction sur les éléments de couplage (26, 28) mis en prise avec une force suffisante pour déformer l'un des membres de couplage ou les deux et permettre à chaque élément de couplage précédemment mis en prise d'être retiré par la bouche ouverte de l'autre des membres de couplage.

6. Dispositif de couplage selon l'une quelconque des revendications 1 à 3, dans lequel l'un des membres de couplage (16, 18) est rigide et l'autre est déformable de manière résiliente.

7. Dispositif de couplage selon l'une quelconque des revendications précédentes, dans lequel il est prévu deux jeux (12, 14) desdits membres de couplage, la portion de base (24) de chaque dit membre de couplage du premier dit jeu (12) étant assujettie opérationnellement à une première bande de support (20) et la portion de base de chaque dit membre de couplage de l'autre dit jeu (14) étant assujettie opérationnellement à une deuxième bande de support (22).

8. Dispositif de couplage selon la revendication 7, dans lequel la portion de base (24) de chaque dit élément de couplage dans ledit premier jeu (12) est formée d'un seul tenant avec ladite première bande de support (20) et la portion de base (24) de chaque dit membre de couplage de l'autre dit jeu (14) est formée d'un seul tenant avec ladite deuxième bande de support (22).

9. Dispositif de couplage selon l'une quelconque des revendications 1 à 8, dans lequel il est prévue deux jeux (64) desdits membres de couplage, les membres de couplage de chaque jeu étant globalement alignés axialement et espacés les uns des autres, la portion de base des membres de couplage de chaque jeu étant fixé opérationnellement à une plaque respective (66) sur un bord latéral de celle-ci.
